# FASCICULE DE BREVET EUROPEEN

(11) **EP 2 836 404 B1**
(45) Date de publication et mention de la délivrance du brevet: **16.11.2016**
(21) Numéro de dépôt: 13719978.2
(22) Date de dépôt: 04.04.2013
(51) Int. Cl.: B60T 7/06, B60R 21/09, G05G 1/32

(54) **PEDALE DE VEHICULE AUTOMOBILE INTEGRANT DES MOYENS DE DEVIATION DU PIED DU CONDUCTEUR EN CAS DE CHOC**
FAHRZEUGPEDAL MIT INTEGRIERTEM FUSSABLEKNUNGSANORDNUNG, LENKT FAHRERFUSS AB BEIM AUFPRALL
VEHILE PEDAL WITH FOOT DEVIATION MEANS WHICH DEVIATES DRIVERS FOOT IN CASE OF IMPACT

(30) Priorité: 13.04.2012 FR 1253403
(43) Date de publication de la demande: 18.02.2015
(73) Titulaire: Peugeot Citroën Automobiles SA, 78140 Vélizy Villacoublay (FR)
(72) Inventeur: CARRASCO, Yoann, F-70200 Palante (FR); PEROTIN, Cyril, F-90000 Belfort (FR); KEMPE, Arnaud, F-68100 Mulhouse (FR)
(74) Mandataire: Rosenberg, Muriel Sylvie
(86) Numéro de dépôt international: PCT/FR2013/050737
(87) Numéro de publication internationale: WO 2013/153316

(56) Documents cités:
- EP-A2- 0 983 918
- DE-A1- 10 261 048
- DE-A1- 19 921 141
- FR-A1- 2 862 263
- GB-A- 2 330 647
- GB-A- 2 480 740

## Description

L'invention porte sur une pédale de véhicule automobile intégrant des moyens de déviation du pied du conducteur en cas de choc.

Plus particulièrement, la présente invention se situe au niveau du poste de conduite et les pédales concernées peuvent être les pédales de frein, d'embrayage et d'accélérateur. La présente invention est plus particulièrement destinée à la pédale d'accélérateur. Une pédale d'accélérateur va être prise comme exemple pour la description de la présente invention. Ceci n'est cependant pas limitatif.

La pédale d'accélérateur est constituée d'une partie fixe formant un boîtier, avantageusement un boîtier électronique. Le boîtier est assemblé sur un pédalier ou raccordé à une structure fixe du véhicule automobile. La pédale comprend aussi un bras de pédale libre en pivotement par rapport au boîtier autour d'un axe d'articulation transversal au boîtier.

Ceci permet au conducteur de commander l'accélération du véhicule et de doser cette accélération en appuyant plus ou moins fort sur un patin disposé à l'extrémité libre du bras opposée à son autre extrémité reliée au boîtier. Plus le conducteur appuie fortement sur la pédale et plus le pivotement du bras par rapport au boîtier est grand.

Pour une pédale selon l'état de la technique, en situation de choc frontal, sous l'effet de la décélération, le pied du conducteur actionne la pédale jusqu'à la position maximale de pivotement. Ensuite, le pied du conducteur glisse sur le bras de pédale jusqu'à rentrer en contact franc avec la partie fixe de la pédale que forme le boîtier.

Ceci engendre un blocage du pied et des efforts importants au niveau de la cheville du conducteur. Sous ces efforts importants, il y a risque de rupture de la cheville et de blessures graves. En effet, il y a risque de torsion au niveau de la cheville et du genou du conducteur. Ces efforts importants au niveau de la cheville peuvent entraîner une rupture de la cheville.

Le document GB-A-2 330 647 décrit une pédale de véhicule classique, sans moyens de déviation latérale du pied.

Le document FR-A-2 862 263 décrit un dispositif comportant une interface devant la pédale pour permettre la déviation du pied. Cette interface est constituée d'une butée supérieure qui est agencée à proximité d'une zone supérieure de sécurité de la face arrière du tablier de façon à arrêter le déplacement du pied dans une position de sécurité dans laquelle la plante du pied est à plat contre la zone supérieure de sécurité, la butée comportant des moyens pour amortir la collision du pied contre la butée.

Ce document prévoit donc l'ajout d'un élément supplémentaire sous la forme d'une butée dans une zone du véhicule qui n'offre pas une grande place. Le manque de place pour la butée, le coût de cette butée ainsi que de son installation rendent l'utilisation de cette butée prohibitive.

Par conséquent, le problème à la base de l'invention est de protéger la jambe du conducteur et notamment son pied appuyant sur une pédale de commande lors d'un choc subi par ledit véhicule, en procurant une pédale évitant au pied du conducteur de heurter trop brutalement contre le boîtier de la pédale.

Pour atteindre cet objectif, il est prévu selon l'invention une pédale de véhicule automobile présentant un boîtier fixe, un bras relié à une première extrémité audit boîtier, ladite extrémité étant montée pivotante autour d'un axe d'articulation transversal au boîtier, ledit bras présentant à son autre extrémité un patin destiné à recevoir la pression du pied du conducteur, caractérisée en ce que le bras de la pédale présente des moyens de déviation du pied du conducteur en cas de choc frontal du véhicule, en ce que les moyens de déviation sont portés par la portion longitudinale médiane ou la portion adjacente à la première extrémité dudit bras et transmettent audit pied un mouvement avec une composante latérale.

L'effet technique est de munir le bras de la pédale d'un profil progressif spécifiquement adapté pour permettre en situation de choc frontal du véhicule de dévier le bout du pied du conducteur appuyant sur cette pédale soit au-dessus ou sur le côté du boîtier afin d'éviter un contact brusque du pied contre le boîtier et donc d'éviter des efforts trop importants au niveau de la cheville du conducteur.

Avantageusement, les moyens de déviation du pied du conducteur transmettent audit pied un mouvement avec une composante dans le sens de la hauteur, lesdits moyens surélevant le pied par rapport à la pédale.

Avantageusement, les moyens de déviation sont sous la forme d'une torsade portée par le bras de la pédale.

Avantageusement, la torsade porte des moyens de guidage permettant la déviation du bout du pied.

Avantageusement, la forme ou les dimensions du boîtier sont modifiées en fonction de la déviation obtenue par les moyens de déviation.

Avantageusement, le boîtier présente des surfaces en retrait sur au moins une portion vers laquelle est dévié le pied du conducteur.

Avantageusement, au moins une portion du boîtier vers laquelle est orienté le pied présente des moyens de guidage en éloignement dudit pied par rapport au boîtier.

L'invention concerne aussi un pédalier de véhicule automobile caractérisé en ce qu'il comprend au moins une telle pédale.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue de côté du pied du conducteur en appui sur une pédale selon l'état de la technique, le pied ayant commencé à glisser sur la pédale vers le boîtier de ladite pédale,
- la figure 2 est une représentation schématique d'une vue de côté du pied du conducteur en appui sur une pédale selon l'état de la technique, le pied ayant glissé sur la pédale jusqu'à buter contre le boîtier de ladite pédale,
- la figure 3 est une représentation schématique d'une vue de côté du pied du conducteur en appui sur une pédale selon la présente invention, le pied ayant commencé à glisser sur la pédale en étant dévié latéralement par rapport à ladite pédale,
- la figure 4 est une représentation schématique d'une vue de côté du pied du conducteur en appui sur la pédale selon la présente invention, le pied ayant commencé à glisser sur la pédale en étant dévié vers le haut par rapport à ladite pédale,
- la figure 5 est une représentation schématique d'une vue de dessus d'une forme de réalisation d'une pédale selon la présente invention, cette figure montrant des moyens de déviation latérale portés par le bras de ladite pédale.

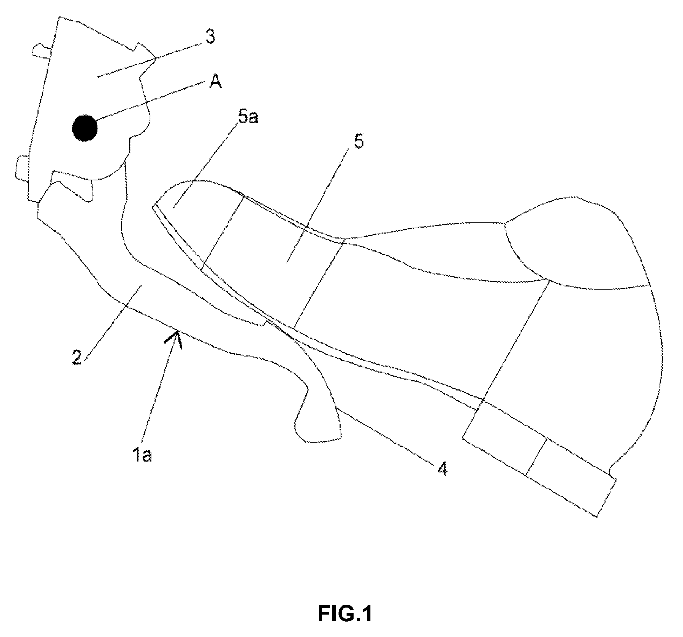

En se référant aux figures 1 à 5, ces figures décrivent une pédale 1 ou 1a manoeuvrée par le pied 5 du conducteur du véhicule, cette pédale 1 ou 1a pouvant être une pédale d'accélérateur, une pédale de frein ou une pédale d'embrayage. Une pédale d'accélérateur est cependant l'application préférée de la présente invention.

De manière générale, une pédale 1a selon l'état de la technique et une pédale 1 selon la présente invention présentent les caractéristiques communes suivantes.

De telles pédales 1 ou 1 a présentent un bras 2 relié à une de ses extrémités à un boîtier 3 fixe solidarisé directement ou indirectement avec la structure du véhicule. La pédale 1 est articulée autour d'un axe d'articulation A transversal par rapport au boîtier fixe 3. A son autre extrémité qui est libre, le bras 2 de la pédale 1 ou 1a porte un patin 4 sur lequel appuie le bout 5a du pied 5 d'un conducteur en fonctionnement normal de la pédale 1 ou 1a.

En position de repos, la pédale 1 ou 1 a peut être inclinée par rapport à la verticale en formant un premier angle avec celle-ci. La pédale 1 ou 1a peut être enfoncée par le pied 5 du conducteur appuyant sur le patin 4 jusqu'à une position maximale où la pédale 1 ou 1a forme un second angle par rapport à la verticale plus petit, ladite pédale 1 ou 1a ayant été poussée vers le bas en étant pivotée par rapport à son axe d'articulation A transversal.

Les figures 1 à 4 ne montrent pas un pied 5 du conducteur appuyant sur le patin 4 du bras 2 de la pédale 1 lors d'un fonctionnement normal mais un pied 5 ayant glissé sur la pédale 1 ou 1a vers le boîtier 3 fixe. En effet, en cas de choc, sous l'effet de la décélération, le pied 5 du conducteur actionne la pédale 1 ou 1a jusqu'à la position maximale. Ensuite, le pied 5 glisse sur le bras 2 de pédale 1 ou 1 a vers le boîtier 3 jusqu'à heurter le boîtier 3 de la pédale 1 ou 1a, ce qui engendre un blocage du pied 5 et des efforts importants au niveau de la cheville du conducteur.

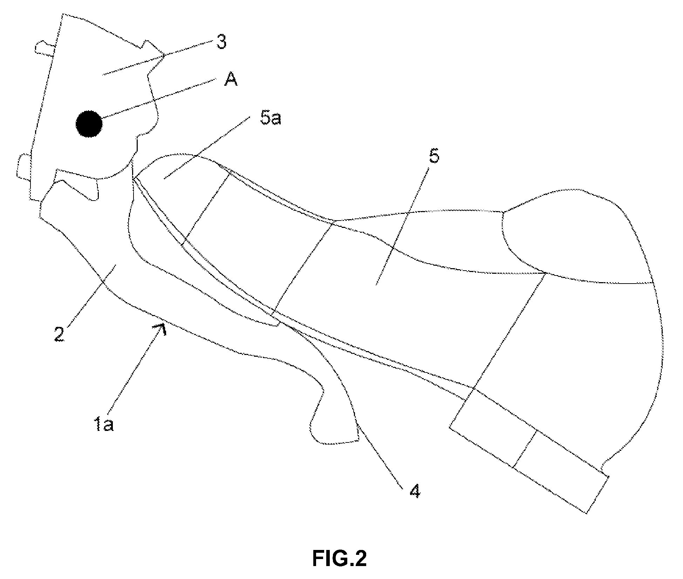

Pour une pédale 1 a de l'état de la technique, comme il est montré aux figures 1 et 2, après avoir glissé du patin 4 vers le bras 2 de la pédale 1a comme montré à la figure 1, le pied 5 du conducteur peut ainsi heurter avec violence le boîtier 3, comme montré à la figure 2, avec les conséquences précédemment mentionnées. Ainsi le bout 5a du pied 5 du conducteur s'écrase contre le boîtier 3.

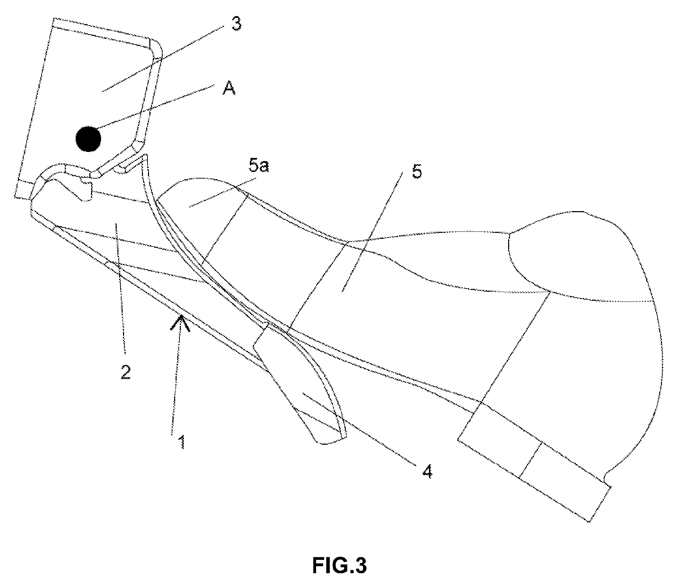

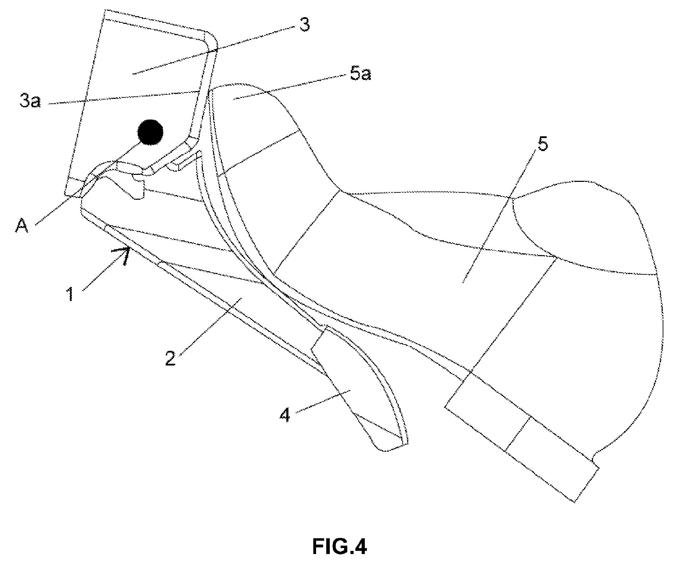

Afin d'éviter un tel choc du pied 5 du conducteur contre le boîtier 3 de la pédale 1, la présente invention prévoit de munir le bras 2 de pédale 1 de moyens de déviation 6 du pied 5 du conducteur afin que ledit pied 5 soit dévié latéralement par rapport au bras 2 de pédale 1 ou surélevé par rapport audit bras 2. Ceci est montré aux figures 3 et 4.

Quand le pied 5 est dévié latéralement par rapport au bras 2 de la pédale 1, le bout 5a du pied 5 du conducteur, de par cette déviation latérale, ne se trouve plus en butée contre le boîtier 3 car il a été déplacé latéralement par rapport audit boîtier 3. Il n'y a donc plus de risque qu'il heurte avec force le boîtier 3. La grandeur de la déviation est avantageusement choisie pour que le bout 5a du pied 5 ne touche plus le boîtier 3 ou au moins ripe contre un bord dudit boîtier 3.

Quand le pied 5 est dévié en hauteur par rapport au bras 2 de la pédale 1, comme il est montré à la figure 4, le bout 5a du pied 5 du conducteur de par cette déviation présentant une composante en hauteur n'arrive pas tendue en contact contre le boîtier 3 mais peut toucher une portion plus haute 3a du boîtier 3. Les orteils du pied 5 du conducteur peuvent être alors sensiblement pliés et, dans cette position, atténuer le choc contre la portion plus haute 3a du boîtier 3 de la pédale 1. Il y a donc un risque diminué que le pied 5 heurte avec force le boîtier 3.

Avantageusement, dans le cas d'une déviation latérale aussi bien que dans le cas d'une déviation en hauteur, les dimensions ou la forme du boîtier 3 peuvent être modifiées afin qu'elles soient adaptées à la grandeur de la déviation. Ceci vaut pour la hauteur du boîtier 3 pour une déviation en hauteur et la largeur du boîtier 3 pour une déviation latérale.

Ainsi, le boîtier 3 de la pédale 1 peut être diminué ou présenter avantageusement des surfaces inclinées pour ses portions qui sont susceptibles de rencontrer le pied 5 afin d'exercer un guidage du bout 5a du pied 5 sans danger pour le conducteur. Cela vaut par exemple pour la portion plus haute 3a du boîtier 3 étant en retrait par rapport au reste de la surface avant du boîtier 3.

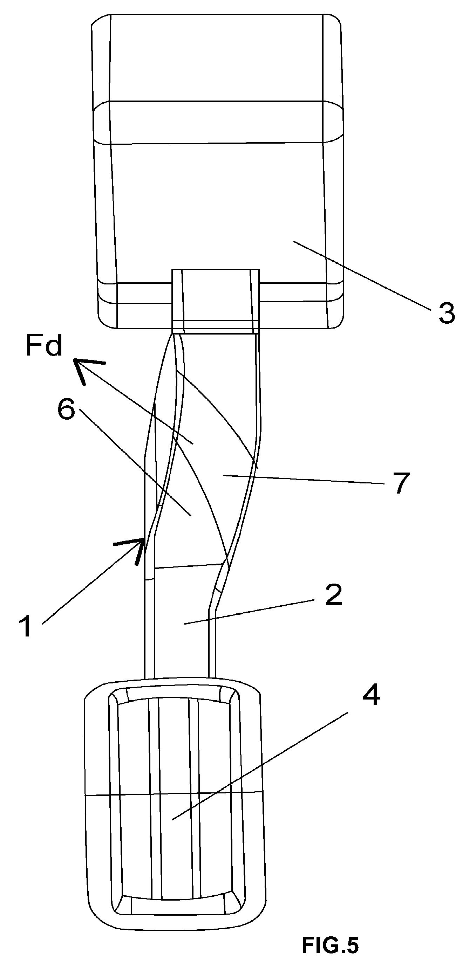

La figure 5 donne une forme de réalisation préférée de moyens de déviation 6 du pied 5 du conducteur afin que ledit pied 5 soit dévié latéralement par rapport au bras 2 de pédale 1. Ces moyens sont sous la forme d'une torsade 6 prévue sur le bras 2 de la pédale 1 cette torsade étant prévue dans la partie médiane ou supérieure du bras 2, c'est-à-dire les parties du bras 2 les plus éloignées du patin 4 de la pédale 1.

Les moyens de déviation peuvent très bien transmettre au pied du conducteur un mouvement de déviation du pied présentant une composante latérale et/ou une composante en hauteur, en combinant par exemple déviation latérale et déviation en hauteur.

A la figure 5, il est recherché une déviation du pied 5 du conducteur vers la gauche du conducteur, pour un conducteur regardant vers l'avant du véhicule, déviation qui est symbolisée par la flèche Fd. Pour réaliser une telle déviation vers la gauche, la torsade 6 est légèrement orientée vers la droite et forme une surélévation sur le bras 2 de la pédale 1.

Ainsi le plan médian longitudinal du boîtier 3 passant par l'ancrage d'une extrémité du bras 2 avec ledit boîtier 3 n'est plus confondu avec le plan médian longitudinal du patin 4 et de l'extrémité libre du bras 2 portant le dit patin 4 car il existe un décalage entre ces deux plans.

Avantageusement, les moyens de déviation, sous la forme d'une torsade 6, comprennent des moyens de guidage 7 du bout du pied pour le dévier latéralement et/ou vers le haut. A la figure 5, ces moyens de guidage 7 sont sous la forme d'une surface biseautée formant rampe de guidage et déviant le bout du pied latéralement quand celui-ci vient en butée contre ladite surface. Ainsi, dès que le bout du pied du conducteur touche un endroit de la rampe 7, la forme de la rampe 7 permet de dévier le pied et ainsi d'éviter un choc trop brutal du pied contre elle. Avantageusement, la rampe 7 est de forme incurvée pour un meilleur guidage du bout du pied du conducteur.

Avantageusement, comme montré à la figure 5, la face supérieure du bras 2 de la pédale 1 présente une surélévation brusque sur la torsade 6 et c'est le bord de cette surélévation qui forme la rampe 7 faisant office de moyens de guidage 7.

Si à la figure 5, il est montré une déviation sur la gauche du pied 5 du conducteur par rapport au boîtier 3, il est bien entendu possible d'inverser cette déviation et d'obtenir une déviation vers la droite. Il est aussi possible d'obtenir une déviation en hauteur et même de combiner une déviation latérale avec une déviation en hauteur.

Le principal avantage de la présente invention est de réaliser avec des moyens de déviation simples ne nécessitant qu'un changement du bras de la pédale, d'éviter les risques de torsion au niveau de la cheville et du genou pour le conducteur lors d'un choc frontal de son véhicule.

## Revendications

1. Pédale (1) de véhicule automobile présentant un boîtier (3) fixe, un bras (2) relié à une première extrémité audit boîtier (3), ladite extrémité étant montée pivotante autour d'un axe d'articulation (A) transversal au boîtier (3), ledit bras (2) présentant à son autre extrémité un patin (4) destiné à recevoir la pression du pied (5) du conducteur, **caractérisée en ce que** le bras (2) de la pédale (1) présente des moyens de déviation (6) du pied (5) du conducteur en cas de choc frontal du véhicule, **en ce que** ces moyens de déviation (6) sont portés par la portion longitudinale médiane ou la portion adjacente à la première extrémité dudit bras (2) et transmettent audit pied (5) un mouvement avec une composante latérale.

2. Pédale (1) selon l'une quelconque des revendications précédentes, pour laquelle les moyens de déviation (6) du pied (5) du conducteur transmettent audit pied (5) un mouvement avec une composante dans le sens de la hauteur, lesdits moyens (6) surélevant le pied (5) par rapport à la pédale (1).

3. Pédale (1) selon l'une quelconque des revendications précédentes, pour laquelle les moyens de déviation (6) sont sous la forme d'une torsade portée par le bras (2) de la pédale (1).

4. Pédale (1) selon la revendication précédente, pour laquelle la torsade porte des moyens de guidage (7) permettant la déviation du bout du pied (5).

5. Pédale (1) selon l'une quelconque des revendications précédentes, pour laquelle la forme ou les dimensions du boîtier (3) sont modifiées en fonction de la déviation obtenue par les moyens de déviation (6).

6. Pédale (1) selon la revendication précédente, pour laquelle le boîtier (3) présente des surfaces en retrait sur au moins une portion vers laquelle est dévié le pied (5) du conducteur.

7. Pédale (1) selon l'une quelconque des deux revendications précédentes, pour laquelle au moins une portion du boîtier (3) vers laquelle est orienté le pied (5) présente des moyens de guidage en éloignement dudit pied (5) par rapport au boîtier (3).

8. Pédalier de véhicule automobile **caractérisé en ce qu'**il comprend au moins une pédale (1) selon l'une quelconque des revendications précédentes.

## Patentansprüche

1. Fahrzeugpedal (1), das ein stationäres Gehäuse (3), einen Arm (2), der mit einem ersten Ende an dem Gehäuse (3) verbunden ist, aufweist, wobei das Ende schwenkend um eine Anlenkachse (A) quer zu dem Gehäuse (3) installiert ist, wobei der Arm (2) an seinem anderen Ende eine Kufe (4) aufweist, die dazu bestimmt ist, den Druck des Fußes (5) des Fahrers zu empfangen, **dadurch gekennzeichnet, dass** der Arm (2) des Pedals (1) Mittel zum Ablenken (6) des Fußes (5) des Fahrers bei einem Frontalaufprall aufweist, dass diese Ablenkmittel (6) von dem mittleren Längsabschnitt oder dem Abschnitt benachbart zu dem ersten Ende des Arms (2) getragen werden und auf den Fuß (5) eine Bewegung mit einer seitlichen Komponente übertragen.

2. Pedal (1) nach einem der vorhergehenden Ansprüche, für das die Ablenkmittel (6) des Fußes (5) des Fahrers an den Fuß (5) eine Bewegung mit einer Komponente in die Richtung der Höhe übertragen, wobei die Mittel (6) den Fuß (5) in Bezug zu dem Pedal (1) überhöhen.

3. Pedal (1) nach einem der vorhergehenden Ansprüche, für das die Ablenkmittel (6) die Form einer Wendel haben, die von dem Arm (2) des Pedals (1) getragen wird.

4. Pedal (1) nach dem vorhergehenden Anspruch, für das die Wendel Führungsmittel (7) trägt, die das Ablenken der Spitze des Fußes (5) erlauben.

5. Pedal (1) nach einem der vorhergehenden Ansprüche, für das die Form oder die Maße des Gehäuses (3) in Abhängigkeit von der Ablenkung, die durch die Ablenkmittel (6) erhalten wird, geändert werden.

6. Pedal (1) nach dem vorhergehenden Anspruch, für das das Gehäuse (3) rückwärts versetzte Oberflächen auf mindestens einem Abschnitt, zu dem der Fuß (5) des Fahrers abgelenkt wird, aufweist.

7. Pedal (1) nach einem der vorhergehenden Ansprüche, für das mindestens ein Abschnitt des Gehäuses (3), zu dem der Fuß (5) gerichtet ist, Führungsmittel aufweist, indem der Fuß (5) in Bezug zu dem Gehäuse (3) entfernt wird.

8. Pedalanordnung für Kraftfahrzeug, **dadurch gekennzeichnet, dass** sie mindestens ein Pedal (1) nach einem der vorhergehenden Ansprüche umfasst.

## Claims

1. A motor vehicle pedal (1) having a fixed box (3), an arm (2) connected at a first end to said box (3), said end being pivotally mounted abut an articulation axis (A) transverse to the box (3), said arm (2) having at its other end a pad (4) intended to receive the pressure of the driver's foot (5), **characterized in that** the arm (2) of the pedal (1) has means (6) of deflecting the driver's foot (5) in the case of a frontal impact of the vehicle, **in that** these deflecting means (6) are carried by the median longitudinal portion or the portion adjacent to the first end of said arm (2) and transmit to said foot (5) a movement with a lateral component.

2. The pedal (1) according to any one of the preceding claims, for which the deflecting means (6) of the driver's foot (5) transmit to said foot (5) a movement with a component in vertical direction, said means (6) raising the foot (5) with respect to the pedal (1).

3. The pedal (1) according to any one of the preceding claims, for which the deflecting means (6) are in the form of a twist carried by the arm (2) of the pedal (1).

4. The pedal (1) according to the preceding claim, for which the twist carries guiding means (7) permitting the deflection of the end of the foot (5).

5. The pedal (1) according to any one of the preceding claims, for which the shape or the dimensions of the box (3) are modified as a function of the deflection obtained by the deflecting means (6).

6. The pedal (1) according to the preceding claim, for which the box (3) has recessed surfaces on at least a portion towards which the driver's foot (5) is deflected.

7. The pedal (1) according to any one of the two preceding claims, for which at least a portion of the box (3) towards which the foot (5) is oriented has guiding means away from said foot (5) with respect to the box (3).

8. A motor vehicle pedal set, **characterized in that** it includes at least one pedal (1) according to any one of the preceding claims.
